# EUROPEAN PATENT SPECIFICATION

(11) **EP 3 472 234 B1**
(45) Date of publication and mention of the grant of the patent: **09.12.2020**
(21) Application number: 17728902.2
(22) Date of filing: 13.06.2017
(51) Int. Cl.: C08K 3/22, C08K 5/5415

(54) **FILLED PLASTIC MATERIAL**
GEFÜLLTES KUNSTSTOFFMATERIAL
MATIERE PLASTIQUE REMPLIE

(30) Priority: 15.06.2016 EP 16174611
(43) Date of publication of application: 24.04.2019
(73) Proprietor: Quarzwerke GmbH, 50226 Frechen (DE)
(72) Inventor: KRUBER, Dirk, 53347 Alfter (DE)
(74) Representative: dompatent von Kreisler Selting Werner - Partnerschaft von Patent- und Rechtsanwälten mbB
(86) International application number: PCT/EP2017/064456
(87) International publication number: WO 2017/216192

(56) References cited:
- EP-A1- 1 816 167
- EP-A1- 2 703 351
- WO-A1-2005/071002
- DATABASE WPI Week 200310 Thomson Scientific, London, GB; AN 2003-112148 XP002764261, & WO 02/094946 A1 (SHOWA DENKO KK) 28 November 2002 (2002-11-28)

## Description

The present invention relates to a filled plastic material.

Plastic materials are widespread materials for a variety of applications. Plastic materials are characterized by a good formability, insulation performance, and acceptable strengths.

It is basically known to fill plastic materials with other materials in order to change their properties. Numerous materials can be used for this. For example, boron nitrides are employed for affecting the thermal conductivity, being capable of increasing the thermal conductivity to more than double when a plastic material is filled with them. The fillers used for increasing the conductivity are added in relatively large amounts, so that their price plays an important role in addition to their influences on the mechanical properties, the color, the density, etc.

WO 2014/095984 A1 describes a thermally conductive plastic material containing nesosilicates or metallic silicon.

EP 2 703 351 A1 describes a hexagonal-prismatically shaped zinc oxide obtainable by crystal growth in aqueous solution, and its use, especially as a UV blocker.

The use of fillers is also known for achieving other properties, for example, the use of wollastonite and mica for improving the mechanical properties.

It is the object of the present invention to provide fillers to achieve desirable properties in the plastic composition.

This object is achieved by a composition comprising a plastic material and a content of from 50 to 90% by weight of an additive, wherein said additive comprises zinc oxide that has been treated with a silicon compound.

Thus, according to the invention, a plastic material is admixed with an additive, wherein said additive comprises zinc oxide that has been treated with a silicon compound. Amounts of from 50 to 90% by weight are suitable, wherein amounts of from 60 to 85% by weight are preferred. In addition, the composition contains a plastic material that comprises the majority of the remaining composition. The amount of plastic material is preferably within a range of from 10 to 50%. In addition to the plastic material, other auxiliaries, especially colorants, impact modifiers etc., may also be present.

Preferably, the plastic material contains from 50 to 90% by weight zinc oxide that has been treated with a silicon compound.

In preferred embodiments, the content is at least 60% by weight, at least 65% by weight, at least 70% by weight, or at least 80% by weight. Preferably, the amount is not more than 85% by weight.

Preferably, the zinc oxide is zinc oxide obtained by burning zinc in air. This process is also referred to as French process or indirect process.

According to the invention, it is not hexagonal-prismatically shaped zinc oxide.

Preferably, it is not zinc oxide obtained by crystal growth in aqueous solution.

In one embodiment of the invention, the silicon-containing compounds are silanes, especially silanes in which at least one hydrogen is substituted by a halogen or an alkoxy group.

Further preferably, at least one hydrogen is replaced by an alkyl or substituted alkyl. Thus, preferred compounds include monoalkoxyalkylsilanes, dialkoxyalkyl-silanes, and trialkoxyalkylsilanes, in which said alkyl may be substituted. Preferred substituents include amino, vinyl, epoxy and hydroxy groups. Particularly preferred compounds include triethoxysilanes, trimethoxysilanes, and silicon compounds selected from the group consisting of 3-aminopropyltrimethoxysilane, 3-aminopropyltriethoxysilane, 3-methacryloxypropyltrimethoxysilane, 3-glycidyloxypropyltrimethoxysilane, trimethylethoxysilane, dimethyldiethoxysilane, methyltriethoxy-silane, N-methyl-3-aminopropyltrimethoxysilane, polysiloxane, polyethersiloxane, polyaminosiloxane, H-siloxanes, and hydrolysates of such compounds, and mixtures thereof.

Suitable plastic materials include elastomers, thermoplastic or thermosetting polymers, especially plastic materials selected from polyamide, polyethylene, polypropylene, polystyrene, polycarbonate, polyester, polyetheretherketone, polyoxymethylene, polyphenylenesulfide, polysulfone, polybutylene terephthalate, acrylonitrile-butadiene-styrene, polyurethane, epoxy resins, and mixtures and copolymers thereof. The use in thermoplasts is preferred.

The term "copolymers" includes variants in which prepolymers or monomers with different chemical skeletons are polymerized together. It also includes mixtures of more than two substances, also referred to as terpolymers. In one embodiment, combinations of additives are employed, for example, the zinc oxides according to the invention are combined with further inorganic materials, for example, with nesosilicates.

The suitable specific surface area of the zinc oxide is to be from 0.5 m²/g to 6 m²/g, more preferably from 3.0 m²/g to 6.0 m²/g, or from 1.0 m²/g to 5.0 m²/g, as measured by BET.

The invention also relates to a method for preparing the composition, comprising the step of mixing a plastic material with an additive for a content of from 50 to 90% by weight, wherein said additive comprises zinc oxide that has been treated with a silicon compound.

The mixing is preferably effected under conditions under which the plastic material softens, for example, within the scope of an extrusion.

The invention further relates to the use of zinc oxide that has been treated with a silicon compound for improving the thermal conductivity of plastic materials. Surprisingly, the compounds according to the invention not only show thermal conductivity properties, but excellent mechanical properties, in particular.

The plastic materials according to the invention show very good values with respect to tensile strength, tensile strain at tensile strength, tensile stress at break, tensile strain at break, and modulus of elasticity. The improvement of impact strength and notched impact strength is particularly significant. In addition, the compositions according to the invention have a good thermal conductivity, which is usually a little higher than that of comparative materials.

Although the degree of filling of the plastic materials is high and high degrees of filling typically deteriorate mechanical properties, the products according to the invention show very high tensile strengths, higher than those of the unfilled plastic materials.

While the impact strength is typically highly reduced by fillers, it is found that the coating of the fillers according to the invention produces impact strengths that are again on the order of that of the unfilled plastic material, thus being surprisingly high.

### Examples

### 1. Fillers employed

Five variants of zinc oxides were examined:

| Filler | BET [m²/g] |
|---|---|
| Zinc oxide A | 4 |
| Zinc oxide B | 1.3 |
| Zinc oxide C | 4.3 |
| Zinc oxide D (comparative) | 7.5 |
| Zinc oxide E | 2 |

### 2. Coating

Zinc oxides A and B were coated with 3-aminopropyltriethoxysilane. Thus, the dried zinc oxide was premixed with the silane (2%) and mixed in an intensive mixer (R02 VAC, Eirich, Germany) at 2000 rpm and 70 °C for 15 minutes. Subsequently, the mixture was cooled down to room temperature. The mixture was freed from agglomerates by screening (100 µm mesh size). Subsequently, the surface area (BET) was measured.

The powder obtained was employed for extrusion without further treatment.

**Table 1**

| Filler | BET [m²/g] |
|---|---|
| Zinc oxide A coated (A-S) | 3.5 |
| Zinc oxide B coated (B-S) | 1 |

### 3. Preparation of the filled plastic materials

In the case of the thermoplasts, the filler was compounded into polycaprolactam (PA6) through an extruder (ZSE 27 MAXX, Leistritz, Germany).

The preparation of the required specimens for the characterization of the composites was effected on a machine of the type Ergotech 100/420-310 (Demag) with a clamp force of 1000 kN. The injection mold employed was one having a certification according to the specifications of "CAMPUS". The following molded parts were prepared:
Multipurpose test specimen (ISO 3167 Type A)
Plate: 80 mm x 80 mm x 2 mm

The specimens needed for measuring the thermal conductivity were mechanically worked out of the plates. For measuring across the direction of extrusion (Z direction), disks with d = 12.7 mm were prepared by turning out of the central position of the plates. For the determination of the thermal conductivity in the direction of extrusion (X direction), 6 specimens each with 12.7 mm edge length (square) and 2 mm width had to be lathed out, which were then rotated by 90° with respect to each other and clamped together in a specific sample holder for measuring. The front and back sides of the samples were predominantly coated with graphite to ensure an optimum emission/absorption capacity. The specific heat was determined by a comparative method. For this purpose, the device was calibrated with a cp reference (Pyroceram, 2.5 mm thick). The density of the specimens employed was determined by the buoyancy method.

The ash content was additionally determined (750 °C, 10 min; open) in a microwave incineration system MAS 7000 (CEM) for checking the composition of the composite, and used in this form.

The thermal diffusivity and the specific heat were measured with a flash apparatus NETZSCH LFA 447 NanoFlash™. The system is equipped with a furnace for measurements between room temperature and 300 °C. With the integrated software-controlled automated sample changer, up to 4 samples can be examined at the same time. The heating of the sample front side is effected with a xenon flashlight with energy adjustable by varying the voltage and pulse length. The resulting temperature increase on the backside of the sample is measured with an infrared detector (InSb). The LFA 447 is in accordance with the national and international standards ASTM E-1461, DIN 30905, DIN EN 821, DIN 51936:2008-08 (measurement by means of infrared sensor), and ISO 22007-4:2008 (polymers).

### 4. Measurements

On the thus prepared specimens, mechanical properties and the thermal conductivity were measured, which are shown in Tables 2 to 4. Experiments C0 to C5 refer to Comparative Experiments, and Experiments 1 to 4 refer to experiments according to the invention.

**Table 2**

| Composition | Filler/degree of filling | Tensile properties | | | | |
|---|---|---|---|---|---|---|
| | | Tensile strength | Tensile strain at tensile strength | Tensile stress at break | Tensile strain at break (crosshead) | Modulus of elasticity |
| | [% by weight] | [MPa] | [%] | [MPa] | [%] | [MPa] |
| C-0 | Polyamide unfilled | 85.5 | 4 | 75.3 | 8.4 | 3210 |
| C-1 | A 65% | 92.3 | 1.9 | 92.3 | 3.6 | 7260 |
| C-2 | B 65% | 76.4 | 1.4 | 76.4 | 2.9 | 7240 |
| C-3 | C 65% | 85.2 | 1.8 | 85.2 | 3.4 | 6350 |
| C-4 | D 65% | 72.2 | 1.4 | 72.2 | 2.8 | 6090 |
| C-5 | E 65% | 89.7 | 2 | 89.7 | 3.6 | 6780 |
| 1 | A-S 65% | 104 | 3.3 | 103 | 6.2 | 8080 |
| 2 | A-S 70% | 108 | 3.1 | 107 | 5.4 | 9350 |
| 3 | A-S 80% | 116 | 2 | 116 | 3.7 | 13500 |
| 4 | B-S 65% | 94.4 | 2.3 | 94.4 | 4 | 7520 |

| | | | | | | |
|---|---|---|---|---|---|---|
| While 65% filling with uncoated zinc oxide causes a tensile strength of 92.3 or 76.4 MPa, the coated zinc oxide achieves a tensile strength of from 104 to 94.4 MPa - a significant increase. | | | | | | |

**Table 3**

| Composition | Filler/degree of filling | Charpy pendulum impact tests | | Izod pendulum impact tests | |
|---|---|---|---|---|---|
| | | Impact strength | Notched impact strength | Impact strength | Notched impact strength |
| | [% by weight] | [kJ/m²] | [kJ/m²] | [kJ/m²] | [kJ/m²] |
| C-0 | Polyamide unfilled | 131.9 | 2.72 | 106.76 | 2.5 |
| C-1 | A 65% | 49.61 | 3.25 | 40.73 | 3.46 |
| C-2 | B 65% | 50.24 | 2.55 | 37.81 | 3.3 |
| C-3 | C 65% | 66.32 | 4.23 | 52.43 | 3.94 |
| C-4 | D 65% | 31.48 | 3.42 | 29.55 | 3.62 |
| C-5 | E 65% | 50.33 | 2.98 | 41.01 | 3.05 |
| 1 | A-S 65% | 95.23 | 5.94 | 81.06 | 8.3 |
| 2 | A-S 70% | 82.4 | 5.55 | 68.94 | 6.79 |
| 3 | A-S 80% | 49.38 | 3.56 | 41.22 | 5.03 |
| 4 | B-S 65% | 77.3 | 5 | 63.04 | 6.32 |

| | | | | | |
|---|---|---|---|---|---|
| While 65% filling with uncoated zinc oxide causes a Charpy impact strength of 49.61 or 50.24 kJ/m², the coated zinc oxide achieves a Charpy impact strength of 95.23 or 77.3 kJ/m² - a significant increase. The Izod impact strength shows similar results. | | | | | |

**Table 4**

| Composition | Filler/degree of filling | Heat deflection temperature | Thermal conductivity | |
|---|---|---|---|---|
| | | HDT A | Z direction | X direction |
| | [Gew-%] | [°C] | [W/mK] | [W/mK] |
| C-0 | Polyamide unfilled | 72.08 | 0.3 | 0.3 |
| C-1 | A 65% | 113.28 | 0.924 | 1.464 |
| C-2 | B 65% | 113.34 | 0.92 | 1.311 |
| C-3 | C 65% | 95.57 | 0.844 | 0.936 |
| C-4 | D 65% | 84.94 | 0.758 | 0.825 |
| C-5 | E 65% | 93.57 | 0.845 | 1.102 |
| 1 | A-S 65% | 118.48 | 1.03 | 1.371 |
| 2 | A-S 70% | 136.67 | 1.174 | 1.387 |
| 3 | A-S 80% | 162.42 | 1.732 | 2.161 |
| 4 | B-S 65% | 108.17 | 1.04 | 1.366 |

| | | | | |
|---|---|---|---|---|
| While 65% filling with uncoated zinc oxide causes a thermal conductivity in the Z direction of 0.924 or 0.92 W/mK, the coated zinc oxide achieves a thermal conductivity in the Z direction of 1.03 or 1.04 W/mK - an increase. By increasing the filling degree from 65% to 80%, the thermal conductivity can be increased again strongly from 1.03 to 1.732 W/mK. The thermal conductivity in the X direction shows similar results. | | | | |

### 5. Measuring methods

Thermal conductivity: Measurement by means of LFA 447 NanoFlash®, Netzsch, Germany
BET: Measurement by analogy with DIN ISO 9277 by means of Tristar 3000, Micromeritics

| Test | | ISO standard | Specimen dimensions |
|---|---|---|---|
| Tensile tests (tensile strength, tensile strain at tensile strength, tensile stress at break, tensile strain at break (crosshead), modulus of elasticity) | | DIN EN ISO 527-1 | 107 x 20 x 4 mm |
| Impact strength | Izod | ISO 180 Izod | 80 x 10 x 4 mm |
| | Charpy | ISO 179-1 Charpy | 80 x 10 x 4 mm |
| Heat deflection temperature | | ISO 75 (0.45 MPa) | 80 x 10 x 4 mm |

## Claims

1. A composition comprising a plastic material and a content of from 50 to 90% by weight of an additive, wherein said additive comprises zinc oxide that has been treated with a silicon compound, wherein said zinc oxide has a specific surface area (BET) of from 0.5 m²/g to 6 m²/g before being treated with a silicon compound.

2. The composition according to claim 1, wherein said zinc oxide has a specific surface area (BET) of 5 m²/g or less before being treated with a silicon compound.

3. The composition according to claim 1 or 2, wherein the content of additive is from 60 to 85% by weight.

4. The composition according to any of claims 1 to 3, wherein said plastic material is an elastomer, thermoplastic or thermosetting polymer.

5. The composition according to any of claims 1 to 4, wherein said plastic material is selected from polyamide, polyethylene, polypropylene, polystyrene, polycarbonate, polyester, polyetheretherketone, polyoxymethylene, polyphenylenesulfide, polysulfone, polybutylene terephthalate, acrylonitrile-butadiene-styrene, polyurethane, epoxy resins, and mixtures and copolymers thereof.

6. The composition according to any of claims 1 to 5, wherein said additive includes further inorganic substances.

7. The composition according to any of claims 1 to 6, wherein said silicon compound is a silane, especially a triethoxysilane, a trimethoxysilane, or oligomers derived from these classes of substances.

8. The composition according to any of claims 1 to 7, wherein said silicon compound is selected from the group consisting of 3-aminopropyltrimethoxysilane, 3-aminopropyltriethoxysilane, 3-methacryloxypropyltri-methoxysilane, 3-glycidyloxypropyltrimethoxysilane, trimethylethoxysilane, dimethyldiethoxysilane, methyltriethoxysilane, N-methyl-3-aminopropyltrimethoxysilane, polysiloxane, polyethersiloxane, polyaminosiloxane, H-siloxanes, and hydrolysates of such compounds, and mixtures thereof.

9. The composition according to any of claims 1 to 8, wherein said treatment with a silicon compound is effected with an amount of silicon compound of from 0.1 to 4% by weight, based on the weight proportion of the zinc oxide.

10. A method for preparing a composition according to any of claims 1 to 9, comprising the step of mixing a plastic material with an additive for a content of from 50 to 90% by weight, wherein said additive comprises zinc oxide that has been treated with a silicon compound, wherein said zinc oxide has a specific surface area (BET) of from 0.5 m²/g to 6 m²/g before being treated with a silicon compound.

11. Use of zinc oxide that has been treated with a silicon compound, wherein said zinc oxide has a specific surface area (BET) of from 0.5 m²/g to 6 m²/g before being treated with a silicon compound, for improving the thermal conductivity of plastic materials.

12. Use of zinc oxide that has been treated with a silicon compound, wherein said zinc oxide has a specific surface area (BET) of from 0.5 m²/g to 6 m²/g before being treated with a silicon compound, for improving the impact strength of plastic materials.

## Patentansprüche

1. Zusammensetzung umfassend einen Kunststoff sowie einen Gehalt von 50 bis 90 Gew.-% an Additiv, wobei das Additiv Zinkoxid, das mit einer Siliciumverbindung behandelt ist, umfasst, wobei das Zinkoxid vor der Behandlung mit einer Siliciumverbindung eine spezifische Oberfläche (BET) von 0,5 bis 6 m²/g aufweist.

2. Zusammensetzung nach Anspruch 1, wobei das Zinkoxid vor der Behandlung mit einer Siliciumverbindung eine spezifische Oberfläche (BET) von 5 m²/g oder weniger aufweist.

3. Zusammensetzung nach Anspruch 1 oder 2, wobei der Gehalt an Additiv 60 bis 85 Gew.-% beträgt.

4. Zusammensetzung nach einem der Ansprüche 1 bis 3, wobei der Kunststoff ein Elastomer, ein thermoplastisches oder duroplastisches Polymer ist.

5. Zusammensetzung nach einem der Ansprüche 1 bis 4, wobei der Kunststoff ausgewählt wird aus Polyamid, Polyethylen, Polypropylen, Polystyrol, Polycarbonat, Polyester, Polyetheretherketon, Polyoxymethylen, Polyphenylensulfid, Polysulfon, Polybutylenterephthalat, Acrylnitril-Butadien-Styrol, Polyurethan, Epoxyharzen sowie Mischungen und Copolymerisaten davon.

6. Zusammensetzung nach einem der Ansprüche 1 bis 5, wobei das Additiv weitere anorganische Substanzen umfasst.

7. Zusammensetzung nach einem der Ansprüche 1 bis 6, wobei die Siliciumverbindung ein Silan ist, insbesondere ein Triethoxysilan, ein Trimethoxysilan oder aus diesen Stoffklassen abgeleitete Oligomere sind.

8. Zusammensetzung nach einem der Ansprüche 1 bis 7, wobei die Siliciumverbindung ausgewählt wird aus der Gruppe bestehend aus 3-Aminopropyltrimethoxysilan, 3-Aminopropyltriethoxysilan, 3-Methacryloxypropyltrimethoxysilan, 3-Glycidyloxypropyltrimethoxysilan, Trimethylethoxysilan, Dimethyldiethoxysilan, Methyltriethoxysilan, N-Methyl-3-amino-propyltrimethoxysilan, Polysiloxan, Polyethersiloxan, Polyaminosiloxan, H-Siloxanen sowie Hydrolysaten dieser Verbindungen und deren Mischungen.

9. Zusammensetzung nach einem der Ansprüche 1 bis 8, wobei die Behandlung mit einer Siliciumverbindung mit einer Menge an Siliciumverbindung von 0,1 bis 4 Gew.-%, bezogen auf den Gewichtsanteil des Zinkoxids, erfolgt.

10. Verfahren zur Herstellung einer Zusammensetzung nach einem der Ansprüche 1 bis 9, umfassend den Schritt des Vermischens eines Kunststoffs mit einem Gehalt von 50 bis 90 Gew.-% an Additiv, wobei das Additiv Zinkoxid, das mit einer Siliciumverbindung behandelt ist, umfasst, wobei das Zinkoxid vor der Behandlung mit einer Siliciumverbindung eine spezifische Oberfläche (BET) von 0,5 bis 6 m²/g aufweist.

11. Verwendung von Zinkoxid, das mit einer Siliciumverbindung behandelt ist, wobei das Zinkoxid vor der Behandlung mit einer Siliciumverbindung eine spezifische Oberfläche (BET) von 0,5 bis 6 m²/g aufweist, zur Verbesserung der Wärmeleitfähigkeit von Kunststoffen.

12. Verwendung von Zinkoxid, das mit einer Siliciumverbindung behandelt ist, wobei das Zinkoxid vor der Behandlung mit einer Siliciumverbindung eine spezifische Oberfläche (BET) von 0,5 bis 6 m²/g aufweist, zur Verbesserung der Schlagzähfestigkeit von Kunststoffen.

## Revendications

1. Composition comprenant une matière plastique et une teneur de 50 à 90 % en poids d'un additif, dans laquelle ledit additif comprend de l'oxyde de zinc qui a été traité avec un composé silicium, dans laquelle ledit oxyde de zinc présente une surface spécifique (BET) de 0,5 m²/g à 6 m²/g avant d'être traité avec un composé silicium.

2. Composition selon la revendication 1, dans laquelle ledit oxyde de zinc présente une surface spécifique (BET) de 0,5 m²/g ou moins avant d'être traité avec un composé silicium.

3. Composition selon la revendication 1 ou 2, dans laquelle la teneur en additif est de 60 à 85 % en poids.

4. Composition selon l'une quelconque des revendications 1 à 3, dans laquelle ladite matière plastique est un élastomère, un polymère thermoplastique ou thermodurcissable.

5. Composition selon l'une quelconque des revendications 1 à 4, dans laquelle ladite matière plastique est choisie parmi le polyamide, le polyéthylène, le polypropylène, le polystyrène, le polycarbonate, le polyester, la polyétheréthercétone, le polyoxyméthylène, le polysulfure de phénylène, la polysulfone, le polytéréphtalate de butylène, l'acrylonitrile-butadiène-styrène, le polyuréthane, les résines époxy, et des mélanges et copolymères de ceux-ci.

6. Composition selon l'une quelconque des revendications 1 à 5, dans laquelle ledit additif comporte des substances inorganiques supplémentaires.

7. Composition selon l'une quelconque des revendications 1 à 6, dans laquelle ledit composé silicium est un silane, notamment un triéthoxysilane, un triméthoxysilane, ou des oligomères dérivés de ces classes de substances.

8. Composition selon l'une quelconque des revendications 1 à 7, dans laquelle ledit composé silicium est choisi dans le groupe consistant en le 3-aminopropyltriméthoxysilane, le 3-aminopropyltriéthoxysilane, le 3-méthacryloxypropyltriméthoxysilane, le 3-glycidyloxypropyltriméthoxysilane, le triméthyléthoxysilane, le diméthyldiéthoxysilane, le méthyltriéthoxysilane, le N-méthyl-3-aminopropyltriméthoxysilane, le polysiloxane, le polyéthersiloxane, le polyaminosiloxane, les H-siloxanes, et des hydrolysats de ces composés, et des mélanges de ceux-ci.

9. Composition selon l'une quelconque des revendications 1 à 8, dans laquelle ledit traitement avec un composé silicium est effectué avec une quantité de composé silicium de 0,1 à 4 % en poids, sur la base de la proportion en poids de l'oxyde de zinc.

10. Procédé de préparation d'une composition selon l'une quelconque des revendications 1 à 9, comprenant l'étape de mélange d'une matière plastique avec un additif pour une teneur de 50 à 90 % en poids, dans laquelle ledit additif comprend de l'oxyde de zinc qui a été traité avec un composé silicium, dans laquelle ledit oxyde de zinc présente une surface spécifique (BET) de 0,5 m²/g à 6 m²/g avant d'être traité avec un composé silicium.

11. Utilisation d'oxyde de zinc qui a été traité avec un composé silicium, dans laquelle ledit oxyde de zinc présente une surface spécifique (BET) de 0,5 m²/g à 6 m²/g avant d'être traité avec un composé silicium, pour améliorer la conductivité thermique de matières plastiques.

12. Utilisation d'oxyde de zinc qui a été traité avec un composé silicium, dans laquelle ledit oxyde de zinc présente une surface spécifique (BET) de 0,5 m²/g à 6 m²/g avant d'être traité avec un composé silicium, pour améliorer la résistance aux chocs de matières plastiques.
